# EUROPEAN PATENT APPLICATION

(11) **EP 1 839 994 A2**
(43) Date of publication of application: **03.10.2007**
(21) Application number: 07006440.7
(22) Date of filing: 28.03.2007
(51) Int. Cl.: B62D 1/19

(54) **Steering column apparatus for vehicle**

(30) Priority: 31.03.2006 JP 2006097736
(71) Applicant: FUJI KIKO Co., Ltd., Kosai-shi Shizuoka (JP)
(72) Inventor: Tanai, Hiroyoshi, Kosai-shi Shizuoka (JP)
(74) Representative: Grünecker, Kinkeldey, Stockmair & Schwanhäusser Anwaltssozietät

(57) **Abstract**

A steering column apparatus (1A) for a vehicle includes: a vehicle body fixing bracket (5); an uncoupling bracket (11) fixed to a moving side column jacket (3); a coupling pin (15) that couples the vehicle body fixing bracket (5) and the uncoupling bracket (11) such that they are separated from each other; a cutter member (13) that cancels a coupled state of the coupling pin (15); an energy absorbing member (18) coupled to the vehicle body fixing bracket (5) and the uncoupling bracket (11) to be capable of performing uncoupling therebetween and absorbs impact energy in a coupled state when the moving side column jacket (3) moves in a front direction of a vehicle body; and an actuator (20) that moves the cutter member (13) to a separating position and cancels coupling of the energy absorbing member (18). In the apparatus, the actuator (20) is actuated when it is determined to be low load setting, and the actuator (20) is not actuated when it is determined to be high load setting.

## Description

### BACKGROUND OF THE INVENTION

### 1. Field of the Invention

The present invention relates to a steering column apparatus for a vehicle having an impact energy absorbing structure where, when a driver hits a steering wheel at a time of a vehicle collision (a secondary collision), impact generated at the time of the collision can be reduced.

### 2. Description of the Related Art

As means for securing the safety of a driver of an automobile at a time of a collision, there have been proposed various steering column apparatuses to which an impact absorbing structure is applied. As a convention impact absorbing structure, there is a structure that, when a driver hits a steering wheel, the steering wheel and a moving side column jacket are contracted and moved forward of a vehicle body, and stretching is performed while an energy absorbing member made of metal is torn in a stroke process of the movement, so that the impact energy is absorbed by energy consumed by tearing and plastic deformation. The above mentioned structure is disclosed in a Patent brochure, Japanese Patent Application Laid-open No. Hei:10-217981.

However, in the conventional steering column apparatus for a vehicle, a set load for absorbing impact energy is generally determined based on the status of an impact. Therefore, since the set load is previously determined, shock absorbing operations do not adaptively response against variable conditions of the collision. In other words, in the conventional steering column apparatus for a vehicle, there is a problem that impact energy on the steering column apparatus cannot be effectively absorbed according to the status of a vehicle collision (the collision velocity, the weight of an occupant(s), whether the seatbelt was fastened, or the like).

### SUMMARY OF THE INVENTION

The present invention has been achieved to solve the above problems, and an object of the invention is to provide a steering column apparatus for a vehicle that can effectively absorb impact energy corresponding to the status of a vehicle collision.

To achieve the object, according to a first aspect of the present invention, there is provided a steering column apparatus for a vehicle that comprises: a vehicle body fixing bracket fixed to a vehicle body; an uncoupling bracket fixed to a moving side column jacket; a coupling member that couples the vehicle body fixing bracket and the uncoupling bracket such that the fixing bracket and the uncoupling bracket can be separated from each other; a cutter member that is disposed to be slidable between a coupling position and a separating position and separates the coupling member when the cutter member is moved from the coupling position to the separating position; an energy absorbing member that is coupled to the vehicle body fixing bracket and the uncoupling bracket so as to be capable of uncoupling the vehicle body fixing bracket and the uncoupling bracket from each other and so as to absorb impact energy when the moving side column jacket moves in a front direction of the vehicle body in a coupled state; and an actuator that moves the cutter member held at the coupling position to the separating position and cancels coupling of at least one of the vehicle body fixing bracket and the uncoupling bracket, and the energy absorbing member, wherein the actuator is actuated when it is determined to be low load setting, and the actuator is not actuated when it is determined to be high load setting.

As explained above, according to the invention of the first aspect, since the energy absorbing member does not act at a time of low load setting and impact energy is absorbed by the energy absorbing member at a time of high load setting, large impact energy can be effectively absorbed. With this configuration, impact energy on the steering column apparatus can be effectively absorbed according to the status of a vehicle collision (the collision velocity, the weight of an occupant(s), whether the seatbelt was fastened, or the like).

Furthermore, since the uncoupling bracket and the vehicle body fixing bracket are coupled to each other via the coupling member before a collision, such a drawback can be reliably prevented that the moving side column jacket is contracted and moved due to input at a time of ordinary use (a time of stepping in or out of the vehicle, a time of adjusting a seat position, or a time of a telescopic adjusting operation, while a driver is holding a steering wheel). Further, since the coupling member is cut off by a cutter member and the uncoupling bracket and the vehicle fixing bracket are separated from each other at the time of low load setting, a peak load does not occur at an initial stage of a contracting stroke of the moving side column jacket. Accordingly, a case such as a driver being injured by high load at an initial stroke can be prevented.

A second aspect of the present invention provides the steering column apparatus for a vehicle according to the first aspect, wherein the energy absorbing member is an energy absorbing plate that is plastically deformed while being torn along a tearing portion to absorb impact energy by tearing and plastic deformation, when the moving side column jacket moves in the front direction of the vehicle body in the coupled state.

According to the invention of the second aspect, the same effects as those of the first aspect can be achieved.

A third aspect of the present invention provides the steering column apparatus for a vehicle according to the first or the second aspect, wherein the cutter member has a latch hole and a relief hole communicating therewith, a latch portion of the energy absorbing member is latched to the latch hole so that the energy absorbing member is coupled to the vehicle body fixing bracket via the cutter member, a rod is moved by actuation of the actuator so that the cutter member is moved to the separating position and the latch portion of the energy absorbing member is displaced to a position where the latch portion is inserted into the relief hole according to movement of the cutter member, and the coupling of the energy absorbing member is thereby cancelled.

A fourth aspect of the present invention provides the steering column apparatus for a vehicle according to any one of the first to the third aspects, wherein the actuator includes a rod constituted by a large diameter rod portion and a small diameter rod portion, the large diameter rod portion is latched to a latch hole of the energy absorbing member so that the energy absorbing member is coupled to the vehicle body fixing bracket via the actuator, the rod is moved according to actuation of the actuator so that the cutter member is moved to the separating position and the small diameter rod is displaced to a position where the small diameter rod is inserted into the latch hole of the energy absorbing plate, and coupling of the energy absorbing member is thereby cancelled.

A fifth aspect of the present invention provides the steering column apparatus for a vehicle according to any one of the first to the fourth aspects, wherein the actuator has a U-shape rod bent in a U shape, the U-shape rod is latched to a latch hole of the energy absorbing member so that the energy absorbing member is coupled to the vehicle body fixing bracket via the actuator, the U-shaped rod is moved according to actuation of the actuator so that the cutter member is moved to the separating position and the U-shaped rod escapes from the latch hole of the energy absorbing member, and coupling of the energy absorbing member is thereby cancelled.

According to the inventions of the third to the fifth aspects, in addition to the effects of the inventions of the first and the second aspects, movement of the cutter member and decoupling of the energy absorbing member can be achieved with a simple structure.

A sixth aspect of the present invention provides the steering column apparatus for a vehicle according to any one of the first to the fifth aspects, wherein the energy absorbing member comprising a first energy absorbing member that is coupled to the vehicle body fixing bracket and the uncoupling bracket to be capable of uncoupling the vehicle body fixing bracket and the uncoupling bracket and absorbs impact energy in a coupled state when the moving side column jacket moves in a front direction of the vehicle body, and a second energy absorbing member that absorbs impact energy when the moving side column jacket moves in the front direction of the vehicle.

According to the invention of the sixth aspect, in addition to the effects of the invention of the first aspect, since impact energy is absorbed by only the second energy absorbing member, a small magnitude of impact energy can be efficiently absorbed.

A seventh aspect of the present invention provides the steering column apparatus for a vehicle according to any one of the first to the sixth aspects, wherein the second energy absorbing member is a sliding protrusion that is protruded from at least one of the fixed side column jacket and the moving side column jacket inserted into an upper end portion of the fixed side column jacket toward the other column jacket and that absorbs impact energy through sliding resistance when the moving side column jacket moves in the front direction of the vehicle body.

According to the invention of the seventh aspect, in addition to the effects of the inventions of the first to the sixth aspects, any special part is not required for the second energy absorbing member, so that a space for disposing the part is not required.

An eighth aspect of the present invention provides the steering column apparatus for a vehicle according to any one of the first to the seventh aspects, wherein the second energy absorbing member is a second energy absorbing plate that is coupled to the vehicle body fixing bracket and the uncoupling bracket and that is plastically deformed while being torn along a tearing portion to absorb impact energy by tearing and plastic deformation.

According to the invention of the eighth aspect, in addition to the effects of the inventions of the first to the sixth aspects, a desired energy absorbing characteristic can be obtained by replacement of the second energy absorbing plate.

A ninth aspect of the present invention provides the steering column apparatus for a vehicle according to any one of the first to the eighth aspects, wherein the second energy absorbing member comprises a sliding protrusion that is protruded from at least one of the fixed side column jacket and the moving side column jacket inserted into an upper end portion of the fixed side column jacket toward the other column jacket, and a second energy absorbing plate that is coupled to the vehicle body fixing bracket and the uncoupling bracket and includes a tearing portion.

According to the invention of the ninth aspect, in addition to the effects of the inventions of the first to the sixth aspects, since the second energy absorbing member is constituted by two kinds of energy absorbing structures, the number of variations of the energy absorbing characteristic increases. Furthermore, even if a failure or the like occurs in one of the energy absorbing structures, a minimal impact absorbing function can be maintained, thereby improving its reliability.

### BRIEF DESCRIPTION OF THE DRAWINGS

The above and further objects and novel features of the present invention will more fully appear from the following detailed description when the same is read in conjunction with the accompanying drawings, in which:
Fig. 1 is a perspective view of a steering column apparatus for a vehicle according to a first embodiment of the present invention before a collision;
Fig. 2 is an exploded perspective view of the steering column apparatus for a vehicle according to the first embodiment;
Fig. 3 is a perspective view of a pilot actuator according to the first embodiment before actuation;
Fig. 4 is a sectional view of the first embodiment taken along the line IV-IV in Fig. 1;
Fig. 5 is a sectional view of the first embodiment taken along the line V-V in Fig. 2;
Fig. 6 is a perspective view of the steering column apparatus for a vehicle according to the first embodiment after a collision with high load setting;
Fig. 7 is a perspective view of the pilot actuator according to the first embodiment after actuation;
Fig. 8 is a sectional view showing a state that a cutter member according to the first embodiment has been slid;
Fig. 9 is a perspective view of the steering column apparatus for a vehicle according to the first embodiment after a collision with low load setting;
Fig. 10 is a characteristic diagram of energy absorption representing a time of low load setting and a time of high load setting in the first embodiment;
Fig. 11 is a perspective view of a steering column apparatus for a vehicle according to a second embodiment of the present invention before a collision;
Fig. 12 is an exploded perspective view of the steering column apparatus for a vehicle according to the second embodiment;
Fig. 13 is a perspective view of the pilot actuator according to the second embodiment after actuation;
Fig. 14 is a perspective view of the steering column apparatus for a vehicle according to the second embodiment after a collision with high load setting;
Fig. 15 is a perspective view of the pilot actuator according to the second embodiment after actuation;
Fig. 16 is a perspective view of the steering column apparatus for a vehicle according to the second embodiment after a collision with low load setting;
Fig. 17 is a perspective view of a steering column apparatus for a vehicle according to a third embodiment of the present invention before a collision;
Fig. 18 is an exploded perspective view of the steering column apparatus for a vehicle according to the third embodiment;
Fig. 19 is a perspective view of a pilot actuator according to the third embodiment before actuation;
Fig. 20 is a perspective view of the steering column apparatus for a vehicle according to the third embodiment with high load setting;
Fig. 21 is a perspective view of the pilot actuator according to the third embodiment after actuation;
Fig. 22 is a perspective view of the steering column apparatus for a vehicle according to the third embodiment after a collision with low load setting;
Fig. 23 is a perspective view of a steering column apparatus for a vehicle according to a fourth embodiment of the present invention before a collision;
Fig. 24 is an exploded perspective view of the steering column apparatus for a vehicle according to the fourth embodiment;
Fig. 25 is a perspective view of the steering column apparatus for a vehicle according to the fourth embodiment after a collision with high load setting; and
Fig. 26 is a perspective view of the steering column apparatus for a vehicle according to the fourth embodiment after a collision with low load setting.

### DETAILED DESCRIPTION OF THE PREFERRED EMBODIMENTS

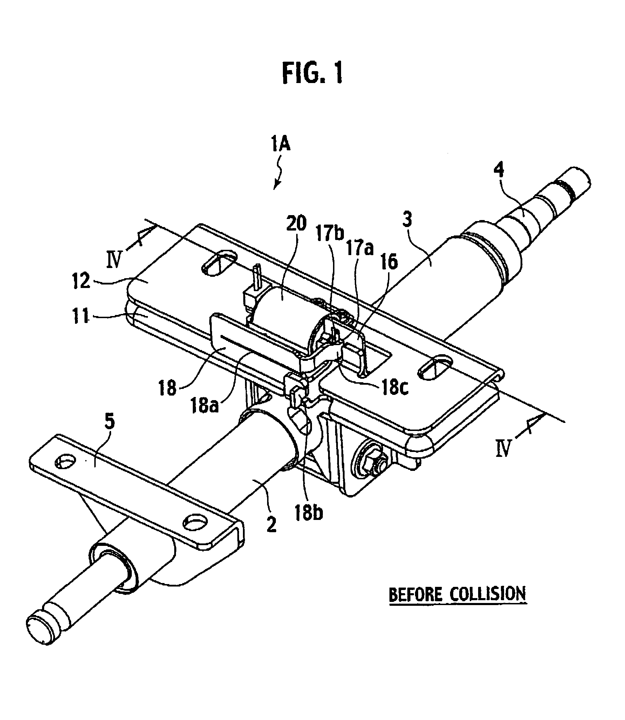

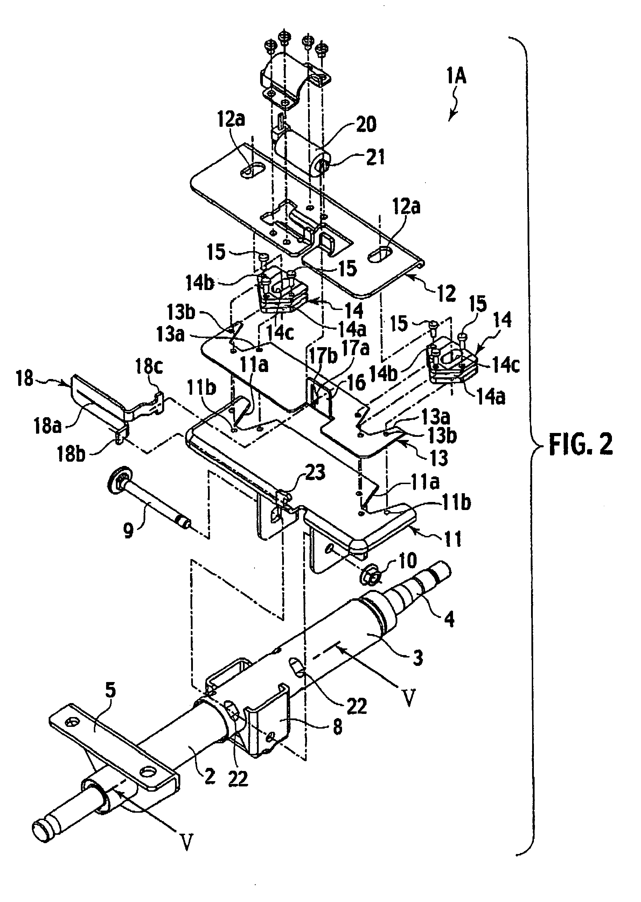

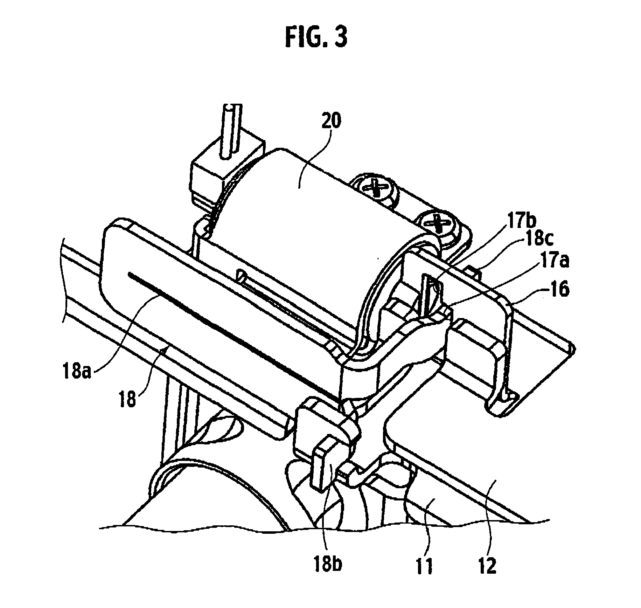

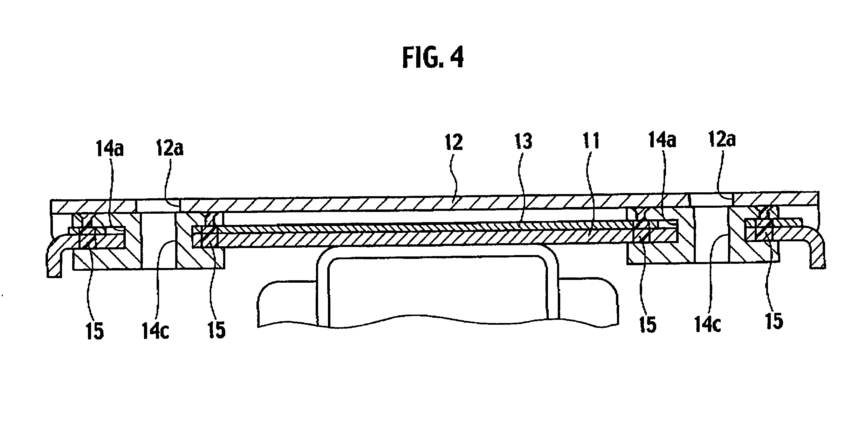

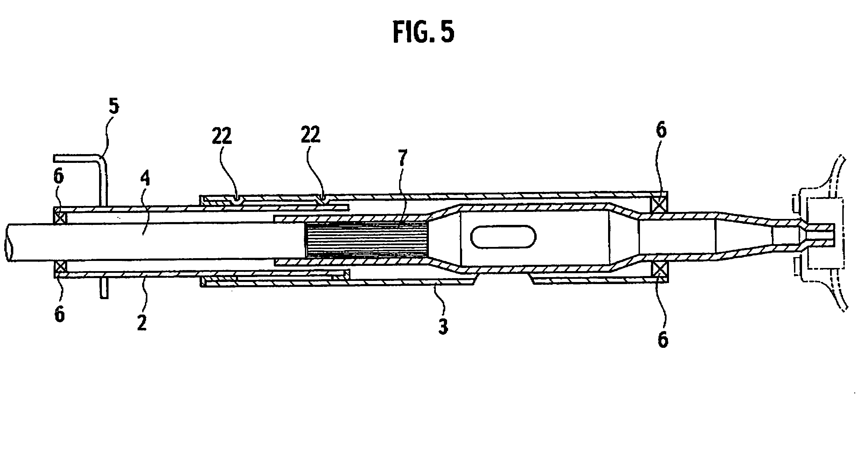

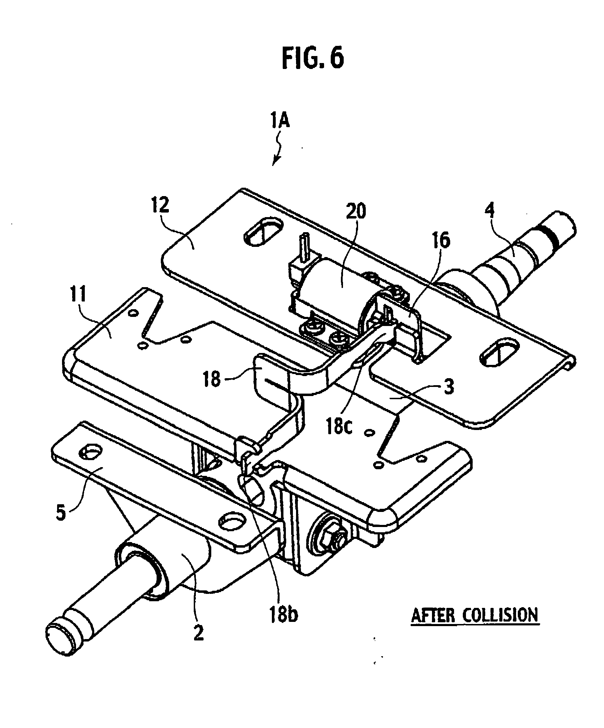

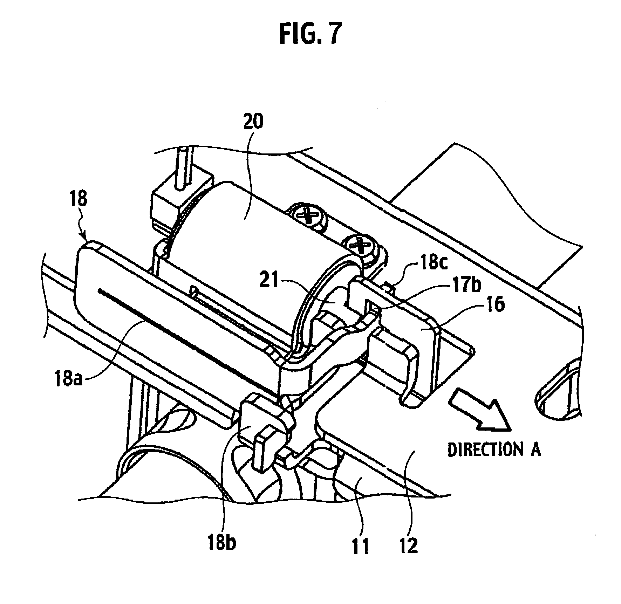

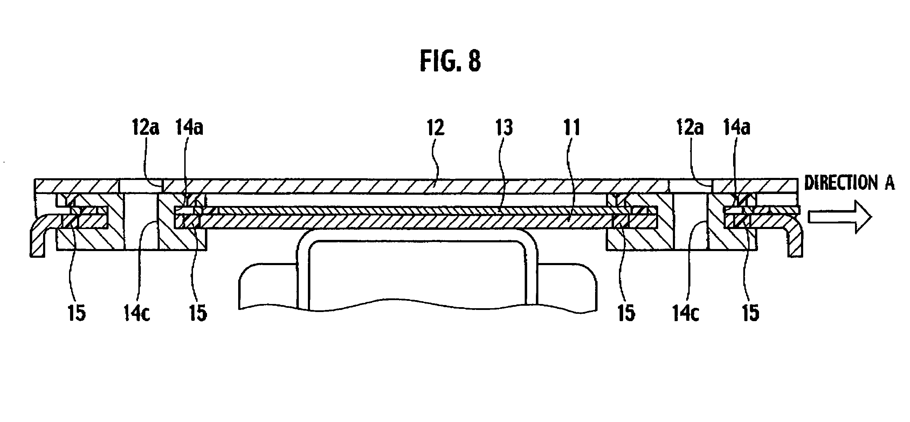

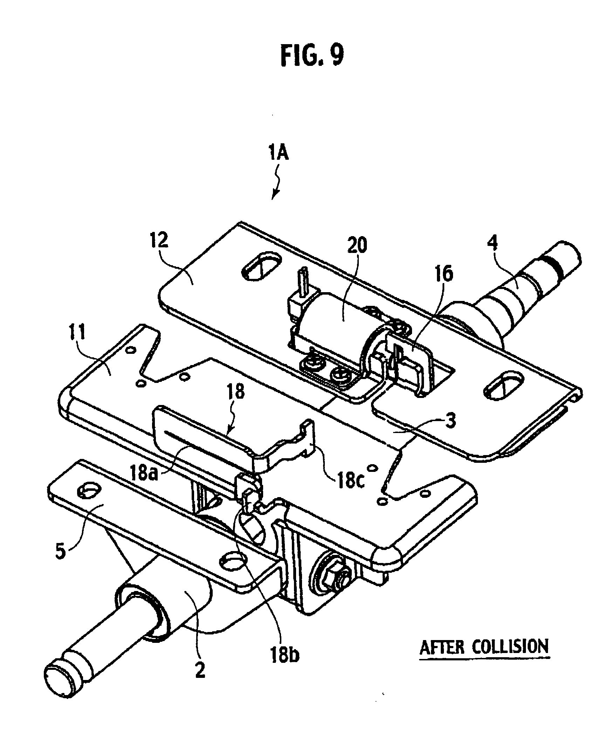

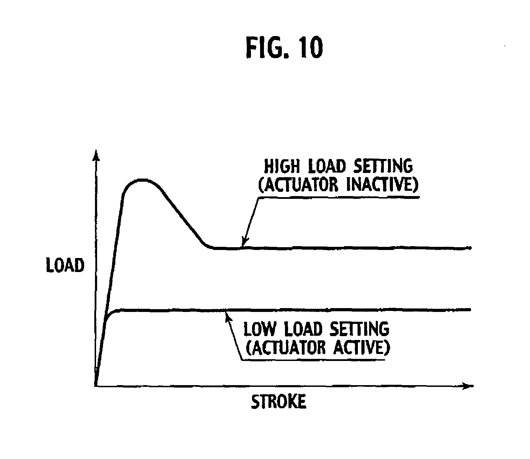

Embodiments of the present invention will be explained with reference to the accompanying drawings. Fig. 1 to Fig. 10 show a first embodiment of the present invention, where Fig. 1 is a perspective view of a steering column apparatus for a vehicle before a collision, Fig. 2 is an exploded perspective view of the steering column apparatus for a vehicle, Fig. 3 is a perspective view of a pilot actuator before actuation, Fig. 4 is a sectional view taken along the line IV-IV in Fig. 1, Fig. 5 is a sectional view taken along the line V-V in Fig. 2, Fig. 6 is a perspective view of the steering column apparatus for a vehicle after a collision with high load setting, Fig. 7 is a perspective view of the pilot actuator after actuation, Fig. 8 is a perspective view showing a state that a cutter member has been slid, Fig. 9 is a perspective view of the steering column apparatus for a vehicle after a collision with low load setting, and Fig. 10 is a characteristic diagram of energy absorption representing a time of low load setting and a time of high load setting. Like members are designated by like reference characters.

As shown in Fig. 1 and Fig. 2, a steering column apparatus for a vehicle 1A includes a cylindrical fixed side column jacket 2, a moving side column jacket 3 that is formed in a cylindrical shape like the fixed side column jacket 2 and is inserted into an upper end portion of the fixed side column jacket 2, a steering shaft 4 that is disposed inside the fixed side column jacket 2 and the moving side column jacket 3, and a steering wheel (not shown) that is fixed at an uppermost end of the steering shaft 4.

The fixed side column jacket 2 is fixed to a vehicle body (not shown) via a fixing bracket 5.

The steering shaft 4 includes two parts of an upper shaft and a lower shaft, it is rotatably supported by the fixed side column jacket 2 and the moving side column jacket via bearings 6, 6 (see Fig. 5), and the upper shaft and the lower shaft are provided such that the upper shaft can be contracted and extended in an axial direction thereof by a spline coupling portion 7 (see Fig. 5).

The moving side column jacket 3 is fixed with a distance bracket 8. An uncoupling bracket 11 is fixed to the distance bracket 8 by a bolt 9 and a nut 10. The uncoupling bracket 11 is coupled to a vehicle body fixation bracket 12 so as to be capable of uncoupling in the following manner.

That is, the uncoupling bracket 11 is formed with a pair of left and right notched portions 11a, 11a. A cutter member 13 superimposed and arranged on an upper face of the uncoupling bracket 11 is also formed with a pair of left and right notched portions 13a,13a. A pair of slide blocks 14, 14 have slits 14a, 14a, respectively, and peripheral edges of the notched portions 11 a and 13a of both the uncoupling bracket 11 and the cutting member 13 are inserted into the respective slits 14a, 14a. A plurality of small holes 11b, 13b, and 14b are respectively formed in peripheral portions of the notched portions 11 a, 13a of both the cutter member 13 and the uncoupling bracket 11, and portions of the slide blocks 14, 14 corresponding thereto. A connecting pin 15 serving as a connecting member is disposed into the small holes 11b, 13b, and 14b on the respective positions of the three parts through resin molding or pin insertion, as shown in Fig. 4 in detail.

The pair of slide blocks 14, 14 are formed with bolt insertion boles 14c, 14c, respectively. Similarly, bolt insertion holes 12a are formed on the vehicle body fixation bracket 12 at symmetrical portions thereof. The vehicle body fixation bracket 12 is fixed to the vehicle body (not shown) by fastening the respective slide blocks 14, 14 together with the vehicle body fixation bracket 12 using bolts (not shown) and nuts (not shown). According to the above configuration, the uncoupling bracket 11 is coupled to the vehicle body fixation bracket 12 via the plurality of coupling pins 15, the cutter member 13, and the pair of slide blocks 14, 14, and a coupled state can be cancelled by cutting and separating the plurality of coupling pins 15.

A pressed standing portion 16 formed by cutting in a portion of the cutting member 13 and bending the portion upward is provided on the cutter member 13. The pressed standing portion 16 is formed with a latch hole 17a with a small width and a relief hole 17b with a large width. The latch hole 17a is set to have a size such that the hole 17a latches a latch portion 18c positioned on the other end of a first energy absorbing plate 18 described below, and the relief hole 17b is set to have a size such that the latch portion 18c can pass through the relief hole 17b without being caught by the relief hole 17b.

The first energy absorbing plate 18 serving as a first energy absorbing member is made of metal, and has a straight tearing portion 18a formed to be thinner than the remaining portion thereof A latch portion 18b is provided at one end of the first energy absorbing plate 18, and the latch portion 18b is latched to a hook portion 23 of the uncoupling bracket 11. A latch projection 18c serving as a latch portion is provided on the other end of the first energy absorbing plate 18. The latch projection 18c is latched to the latch hole 17a of the cutter member 13. That is, the other end of the first energy absorbing plate 18 is latched to the cutter member 13 so that it is coupled to the vehicle body fixed bracket 12 via the cutter member 13, the coupling pin 15, and the pair of slide blocks 14, 14. The latching to the cutter member 13 is cancelled so that the coupling with the first energy absorbing plate 18 can be cancelled. Further, when both the brackets 11 and 12 are separated from each other in a coupled state, the first energy absorbing plate 18 is plastically deformed while the tearing portion 18a is torn, so that impact energy is absorbed by the tearing and plastic deformation.

As shown in Fig. 3, a pilot actuator 20 is fixed to the vehicle body fixing bracket 12 such that a longitudinal direction thereof is perpendicular to a driver and the pilot actuator 20 is installed horizontally. The pilot actuator 20 is configured such that a rod 21 is protruded by explosion of powder. A vertical slit (reference numeral is not designated) is formed on a distal end face of the rod 21, and the pressed standing portion 16 of the cutter member 13 is disposed in the slit. When the rod 21 of the pilot actuator 20 is protruded, the pressed standing portion 16 is pressed, so that the cutter member 13 is slid in a direction A shown in Fig. 7 and Fig. 8. The latch protrusion 18c of the first energy absorbing plate 18 is positioned from the latch hole 17a of the pressed standing portion 16 to the relief hole 17b according to sliding of the cutter member 13.

Ignition ON/OFF of the pilot actuator 20 is controlled by an electronic controller (not shown). The electronic controller is inputted with outputs of a driving status detecting sensor such as a seat position sensor, a weight sensor of a driver, a vehicle velocity sensor, a vehicle occupant position sensor, a seatbelt wearing sensor, and the like, and an impact detecting sensor for detecting impact imparted on a steering wheel. The electronic controller determines the presence/absence of a collision based on information from these sensors, and when the electronic controller determines that there is a collision, it determines whether the impact energy absorbing structure is set to be the low load setting or the high load setting. When the electronic controller determines that the impact energy absorbing structure is set to be the low load setting, it outputs an actuation signal, namely an ignition signal, to the pilot actuator. When the electronic controller determines that the impact energy absorbing structure is set to be the high load setting, it does not output an actuation signal, namely an ignition signal, to the pilot actuator.

The steering column apparatus 1 A includes a second energy absorbing member in addition to the first energy absorbing member (the first energy absorbing plate 18). As shown in Fig. 5, the second energy absorbing member includes two sliding protrusions 22 protruded from a lower end portion of the moving side column jacket 3 toward the fixed side column jacket 2. When the moving side column jacket 3 is contracted and moved in the axial direction, impact energy is absorbed by sliding resistance of the sliding protrusions 22.

An operation of the steering column apparatus 1A at a time of a collision is explained next. When it is determined to be the high load setting, based on information such that impact load acting on the steering wheel (not shown) from a driver at a time of a vehicle collision is relatively large, the pilot actuator 20 is maintained in an OFF state.

When an upper portion of the steering shaft 4 and the moving side column jacket 3 are contracted and moved in the axial direction by impact load acting on the steering wheel (not shown), the plurality of coupling pins 15 are cut and separated by shearing force due to the contraction and movement, so that the uncoupling bracket 11 is uncoupled from the vehicle body fixing bracket 12. The uncoupling bracket 11 uncoupled together with the moving side column jacket 3 is moved in a front direction of the vehicle body. Thereby, the first energy absorbing plate 18 becomes deformed plastically along the tearing portion 18a while the tearing portion 18a is torn, so that it absorbs impact energy owing to the tearing and the plastic deformation. When the moving side column jacket 3 contracts and moves in the axial direction, impact energy is absorbed by sliding resistances of the sliding protrusions 22. Thus, large impact energy is effectively absorbed by the first energy absorbing plate 18 and the sliding protrusions 22 (see Fig. 10). As shown in Fig. 6, movement of the upper shaft of the steering shaft 4 and the moving side column jacket 3 stops after the impact absorbing action.

When it is determined to be the low load setting, based on information such that impact load acting on the steering wheel (not shown) from a driver at a time of a vehicle collision is relatively low, the pilot actuator 20 is turned ON. As shown in Fig. 4, clearances for movement are provided on the left sides of the slide blocks 14 in a state that the cutter member 13 is put in a coupled state by the coupling pins 15. As shown in Fig. 7 and Fig. 8, the cutter member 13 is pressed and slid in the direction A by the rod 21 of the pilot actuator 20 so that the plurality of coupling pins 15 are cut and separated by a shearing force from the cutter member 13. Thereby, the uncoupling bracket 11 is separated from the vehicle body fixing bracket 12. The latching state of the latch portion 18c of the first energy absorbing plate 18 to the cutter member 13 is cancelled according sliding of the cutter member 13.

When the upper shaft of the impact load steering shaft 4 and the moving side column jacket 3 are contracted and moved in the axial direction by impact load acting on the steering wheel (not shown), the vehicle body fixing bracket 12 and the uncoupling bracket 11 are gradually separated from each other, but the first energy absorbing plate 18 is simply moved together with the uncoupling bracket 11 and it does not contribute to energy absorption. When the moving side column jacket 3 is contracted and moved, impact energy is absorbed by sliding resistances of the sliding protrusions 22 (see Fig. 10). As shown in Fig. 9, movement of the steering shaft 4 and the moving side column jacket 3 stop after the impact absorbing action.

Thus, since impact energy is absorbed by only the sliding protrusions 22 at the time of determining low load setting, small impact energy can be absorbed efficiently, and since impact energy is absorbed by both the first energy absorbing plate 18 and the sliding protrusions 22 when the high load setting is determined, large energy can be absorbed efficiently (see Fig. 10). Thus, collision energy of the steering column apparatus 1A can be effectively absorbed according to the status of a vehicle collision (the collision velocity, the weight of an occupant(s), whether the seatbelt was fastened, or the like).

Since the uncoupling bracket 11 and the vehicle body fixing bracket 12 are coupled via the coupling pins 15 before a collision, such a drawback can be reliably prevented that the moving side column jacket 3 contracts and moves due to input at a time of ordinary use (a time of stepping in or out of the vehicle, a time of adjusting a seat position, or a time of a telescopic adjusting operation, while a driver is holding a steering wheel). Since the coupling pins are cut and separated by the cutter member 13 and the uncoupling bracket 11 and the vehicle body fixing bracket 12 are separated from each other at the time of low load setting, as shown in Fig. 10, a peak load does not occur at an initial stage of a contraction stroke of the moving side column jacket 3. Accordingly, an accident such as a driver being injured by a high load in the initial stroke can be prevented.

In the first embodiment, since the first energy absorbing member is coupled to the vehicle body fixing bracket 12 and the uncoupling bracket 11, and it includes the first energy absorbing plate 18 having the tearing portion 18a, desired energy absorbing characteristic can be easily obtained according to replacement of the first energy absorbing plate 18.

In the first embodiment, because the second energy absorbing member is constituted by the sliding protrusions 22 provided on the lower end portion of the moving side column jacket 3, any special part serving as the second energy absorbing member is not required, and therefore a space for disposing the part is not required.

In the first embodiment, since the cutter member 13 has the latch hole 17a and the relief hole 17b communicating therewith, the latch portion 18c of the first energy absorbing plate 18 is latched to the latch hole 17a so that the first energy absorbing plate 18 is coupled to the vehicle body fixing bracket 12 via the cutter member 13, the rod 21 is moved by actuation of the pilot actuator 20 so that the cutter member 13 held at the coupling position is moved to a separating position and the latch portion 18b of the first energy absorbing plate 18 is displaced to a position where it is inserted into the relief bole 17b according to movement of the cutter member 13, and the coupling of the first energy absorbing plate 18 is thereby uncoupled, the movement of the cutter member 13 and uncoupling of the first energy absorbing plate 18 can be achieved with a simple structure.

In the first embodiment, since the initial setting of the energy absorbing structure is set to be the high load setting (both the first energy absorbing plate 18 and the sliding protrusions 22 are in an actuation standby state), when the pilot actuator 20 becomes defective in operation for any reason, the high load setting cannot be changed to the low load setting, but impact energy can be absorbed like the conventional technique.

In the first embodiment, since the pilot actuator 20 is fixed to the vehicle body fixing bracket 12 such that the pilot actuator 10 is installed horizontally to a driver and a longitudinal direction thereof is perpendicular to a driver, the safety of the driver is improved and a large space above the pilot actuator 20 can be secured.

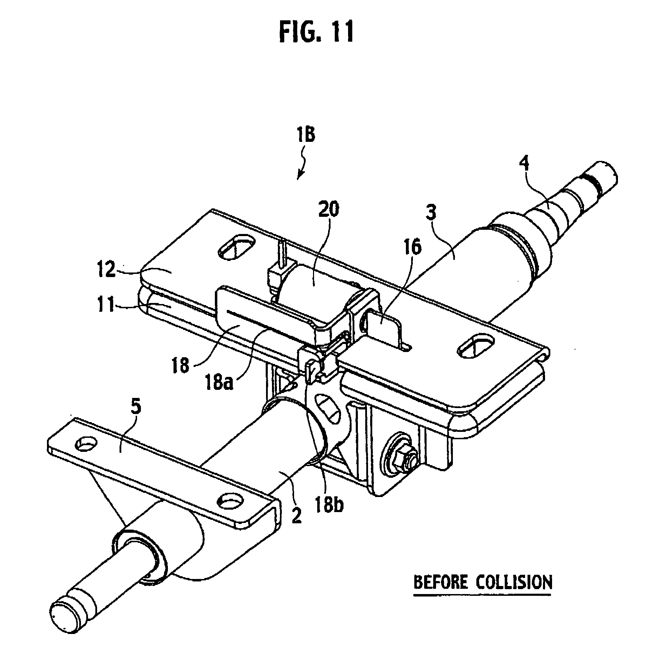

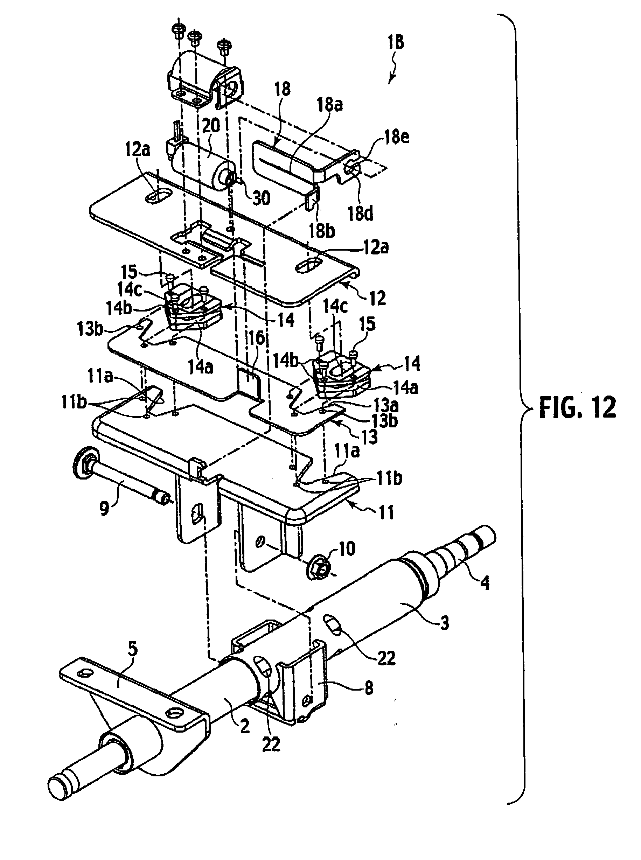

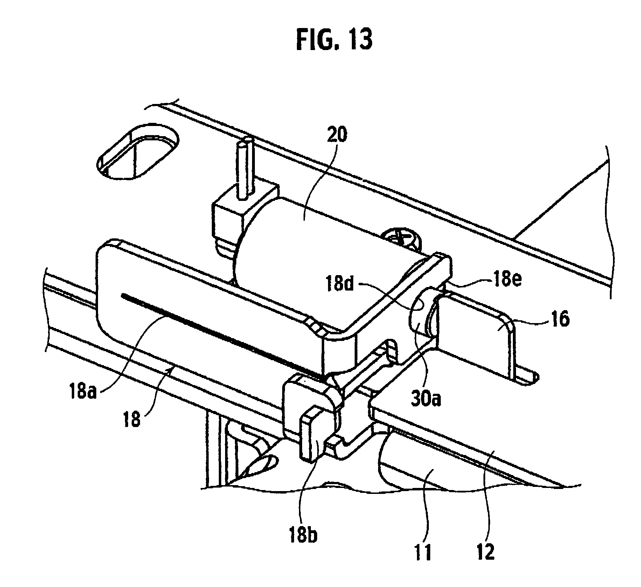

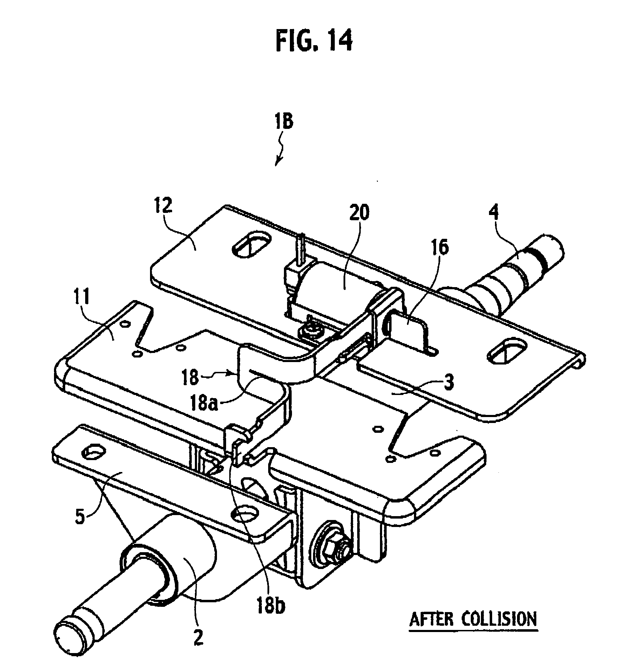

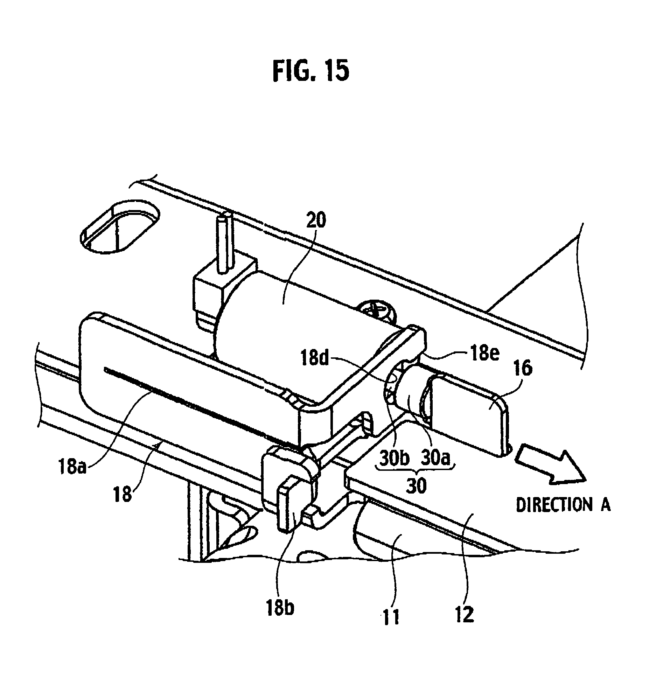

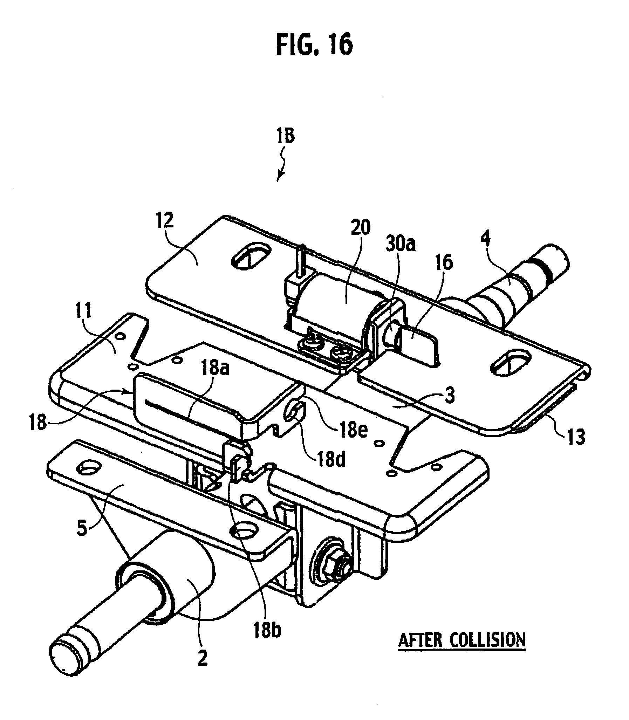

Fig. 11 to Fig. 16 show a second embodiment of the present invention, where Fig. 11 is a perspective view of a steering column apparatus for a vehicle before a collision, Fig. 12 is an exploded perspective view of the steering column apparatus for a vehicle, Fig. 13 is a perspective view of a pilot actuator before actuation, Fig. 14 is a perspective view of a steering column apparatus for a vehicle before a collision with high load setting, Fig. 15 is a perspective view of the pilot actuator after actuation, and Fig. 16 is a perspective view of the steering column apparatus for a vehicle after a collision with low load setting.

As shown in Fig. 11 to Fig. 16, a steering column apparatus for a vehicle 1B of the second embodiment is different from the steering column apparatus of the first embodiment only in a latching structure between a rod 30 of the pilot actuator 20 and the latch portion 18c on the other end of the energy absorbing plate 18.

That is, the pilot actuator 20 has the rod 30 including a large diameter rod portion 30a and a small diameter rod portion 30b. A arc-shaped latch hole 18d serving as a latch portion is provided on the other end of the first energy absorbing plate 18, and an opening portion 18e communicating with the latch hole 18d is also provided. As shown in Fig. I3, the large diameter rod portion 30a of the pilot actuator 20 is latched to the latch hole 18d of the first energy absorbing plate 18. The first energy absorbing plate 18 is coupled to the vehicle body fixing bracket 12 via the pilot actuator 20 by the latching. Accordingly, like the first embodiment when it is determined that impact load applied to a steering wheel (not shown) from a driver is low load, based on information such that the impact load is relatively small, the rod 30 is moved in a direction A according to actuation of the pilot actuator 20, as shown in Fig. 15, so that the large diameter rod portion 30a escapes from the latch hole 18d of the first energy absorbing plate 18 and the small diameter portion 30b enters the latch hole 18d instead. Coupling between the first energy absorbing plate 18 and the pilot actuator 20, therefore, the vehicle body fixing bracket 12 is cancelled according to exiting of the small diameter rod 30b from the opening portion 18e. Simultaneously, since the pressed standing portion 16 of the cutter member 13 is also pressed in the direction A, the cutter member 13 is slid in the direction A, so that the plurality of coupling pins 15 are cut and separated by a shearing force from the cutter member 13. When it is determined that the impact load is high load, based on information such that the impact load is relatively large, the large diameter rod portion 30a of the pilot actuator 20 cannot escape from the opening portion 18e, so that the latch hole 18d of the first energy absorbing plate 18 is coupled to the vehicle body fixing bracket 12 and the first energy absorbing plate 18 is actuated.

Since other configurations are similar to those of the first embodiment, portions with the same configuration are attached with like reference numerals, and explanations thereof will be omitted.

Also in the second embodiment, since the small load setting and the large load setting can be selected as the impact energy absorbing structure like the first embodiment, collision energy of the steering column apparatus 1B can be effectively absorbed according to the status of a vehicle collision (the collision velocity, the weight of an occupant(s), whether the seatbelt was fastened, or the like).

In the second embodiment, the pilot actuator 20 has the large diameter rod portion 30a and the small diameter rod portion 30b, the large diameter rod portion 30a is latched to the latch hole 18d of the first energy absorbing plate 18 so that the first energy absorbing plate 18 is coupled to the vehicle body fixing bracket 12 via the pilot actuator 20, the rod 30 is moved according to actuation of the pilot actuator 20 so that the cutter member 13 held at the coupling position is moved to a separating position and the small diameter rod 30b is displaced to a position where it is inserted into the latch hole 18d of the first energy absorbing plate 18, and coupling of the first energy absorbing plate 18 is thereby cancelled. Therefore, movement of the cutter member and decoupling of the energy absorbing plate 18 can be achieved with a simple structure.

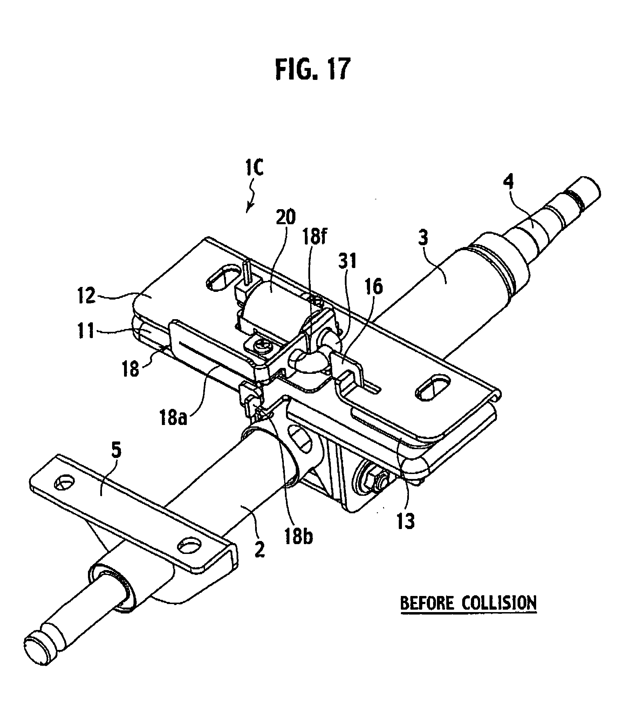

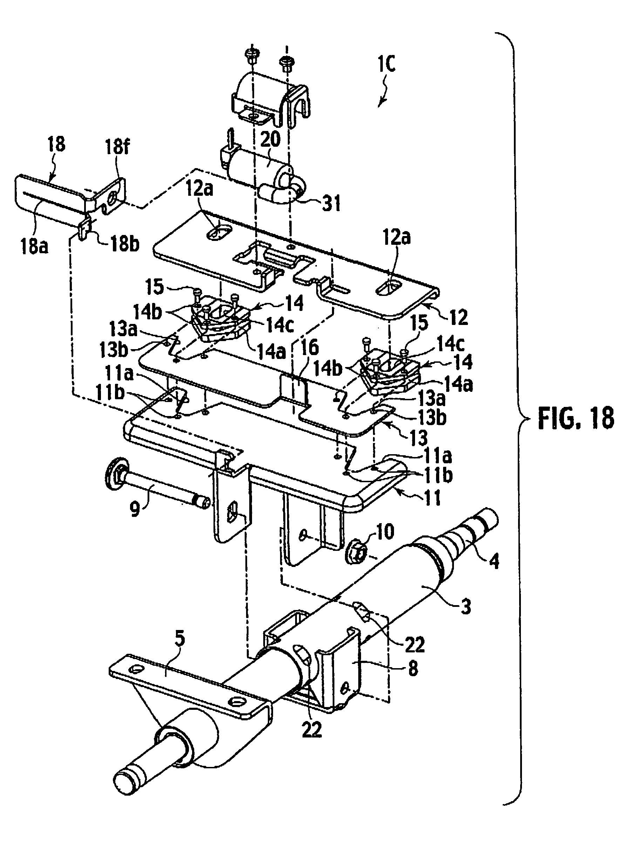

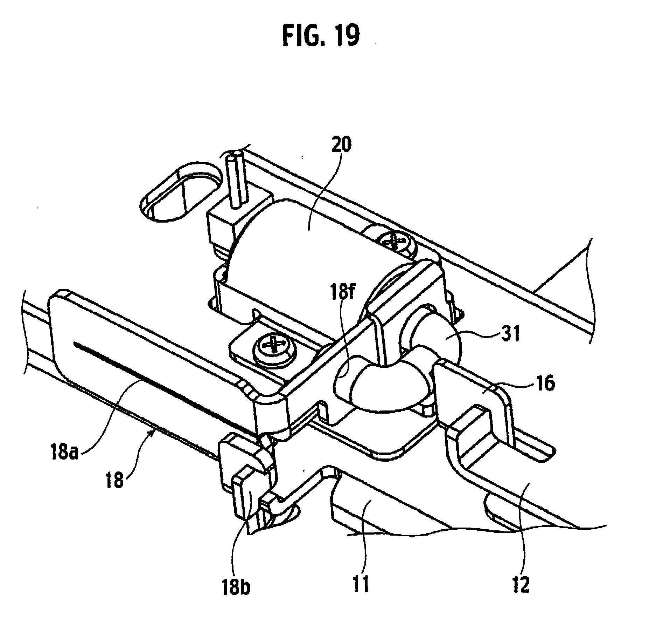

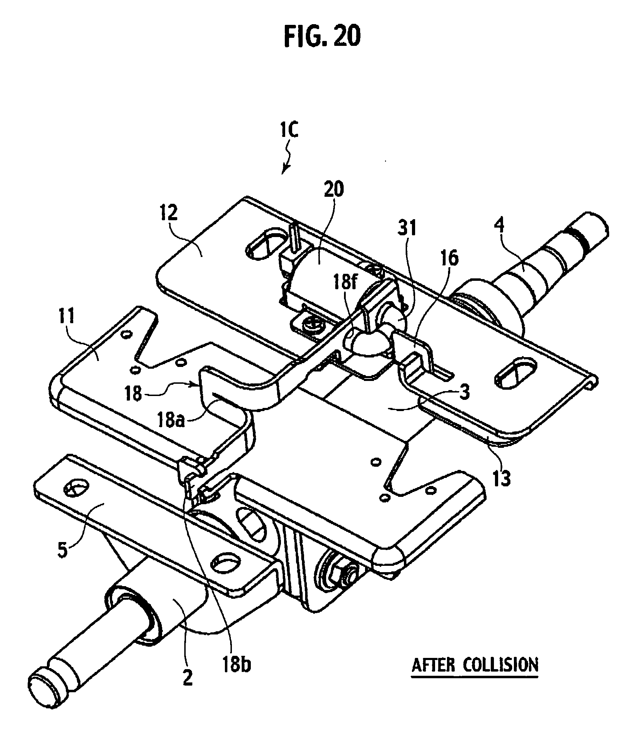

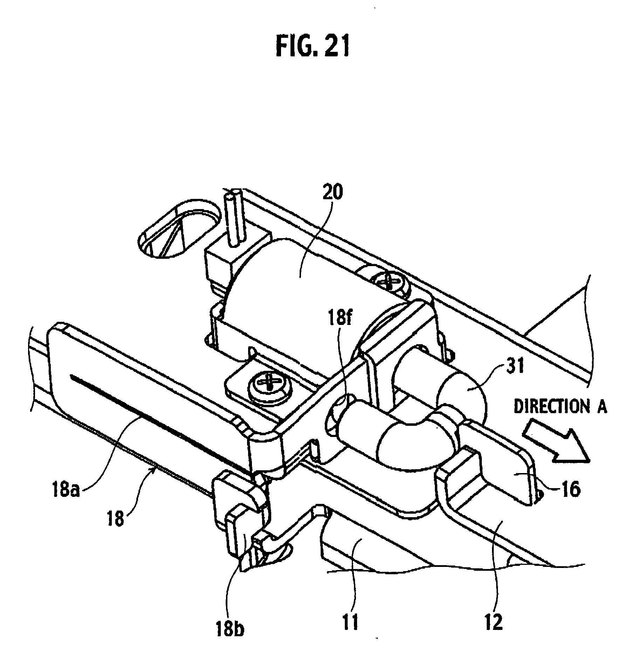

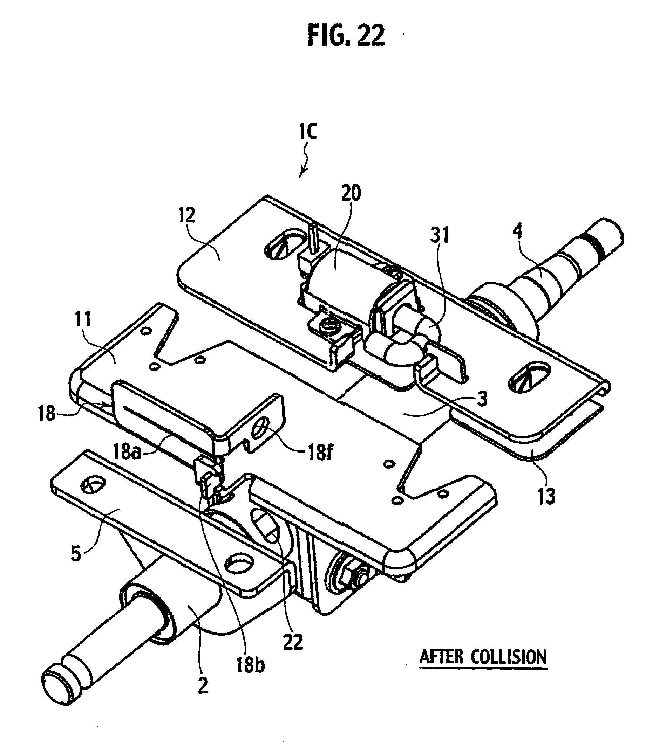

Fig. 17 to Fig. 22 shows a third embodiment of the present invention, where Fig. 17 is a perspective view of a steering column apparatus for a vehicle before a collision, Fig. 18 is an exploded perspective view of the steering column apparatus for a vehicle, Fig. 19 is a perspective view of a pilot actuator before actuation, Fig. 20 is a perspective view of the steering column apparatus for a vehicle after a collision with high load setting, Fig. 21 is a perspective view of the pilot actuator after actuation, and Fig. 22 is a perspective view of the steering column apparatus for a vehicle after a collision with low load setting.

As shown in Fig. 17 to Fig. 22, a steering column apparatus for a vehicle 1C according to the third embodiment is different from the steering column apparatus according to the first embodiment only in a rod structure of the pilot actuator 20 and a structure of the latch portion of the other end of the first energy absorbing plate 18.

That is, the pilot actuator 20 has a U-shape rod 31 bent in a U shape. A latch hole 18f serving as a latch portion is provided on the other end of the first energy absorbing plate 18. As shown in Fig. 19, the U-shaped rod 31 of the pilot actuator 20 is latched to the latch hole 18f. The first energy absorbing plate 18 is coupled to the vehicle body fixing bracket 12 via the pilot actuator 20 by the latching. Accordingly, when it is determined that impact load is high load, the U-shaped rod 31 of the pilot actuator 20 is not moved, so that the first energy absorbing plate 18 is actuated. When the impact load is low load, the U-shaped rod 31 is moved according to actuation of the pilot actuator 20, so that the U-shaped rod 31 escapes from the latch hole 18f of the first energy absorbing plate 18 and coupling of the first energy absorbing plate 18 and the pilot actuator 20, as well as the vehicle body fixing bracket 12 is cancelled, as shown in Fig. 21.

Also in the third embodiment, since the small load setting and the large load setting can be selected as the impact energy absorbing structure like the first embodiment, collision energy of the steering column apparatus 1C can be effectively absorbed according to the status of a vehicle collision (the collision velocity, the weight of an occupant(s), whether the seatbelt was fastened, or the like).

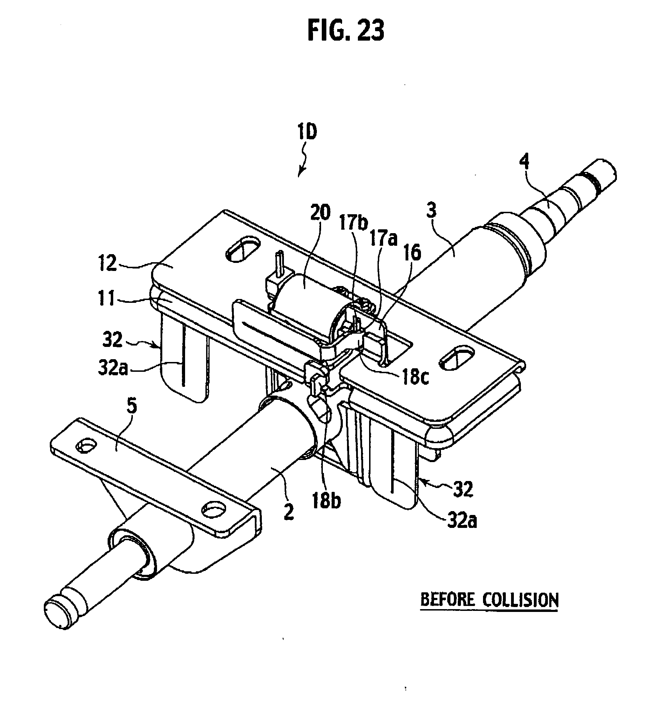

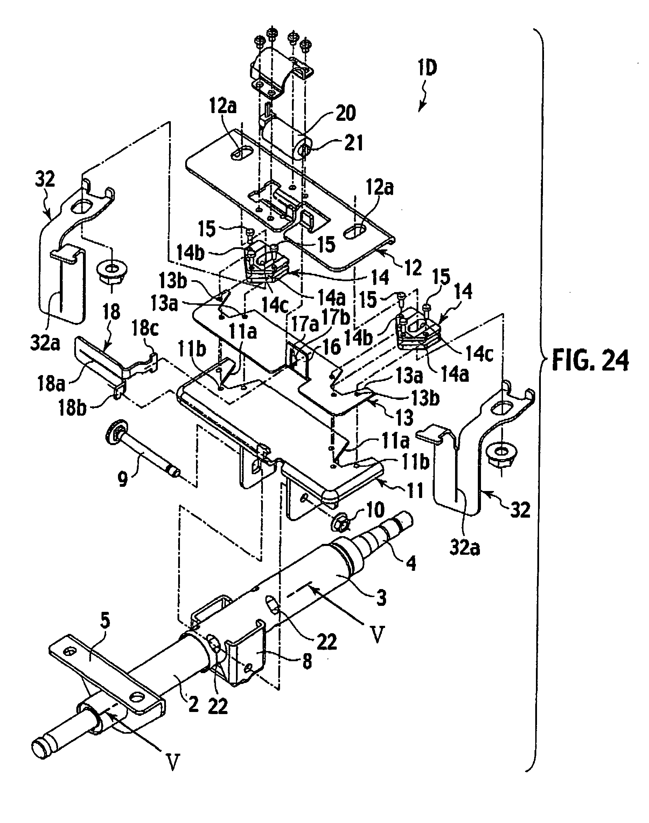

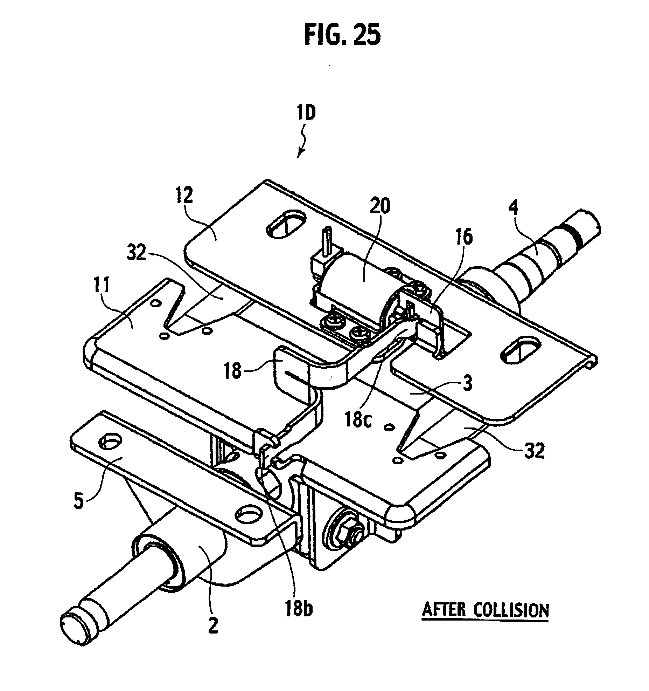

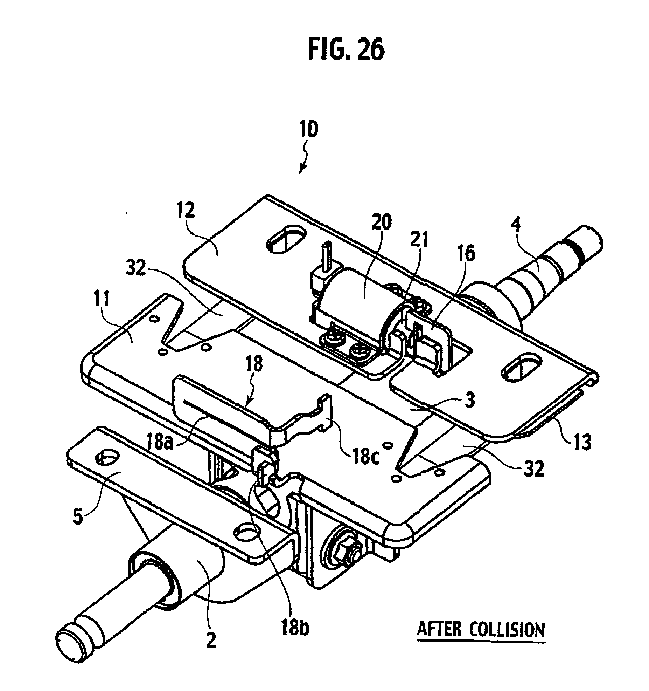

Fig.23 to Fig. 26 shows a fourth embodiment of the present invention, where Fig. 23 is a perspective view of a steering column apparatus for a vehicle before a collision, Fig. 24 is an exploded perspective view of the steering column apparatus for a vehicle, Fig. 25 is a perspective view of the steering column apparatus for a vehicle after a collision with high load setting, and Fig. 26 is a perspective view of the steering column apparatus for a vehicle after a collision with low load setting.

As shown in Fig. 23 to Fig. 26, a steering column apparatus for a vehicle ID according to the fourth embodiment is different from the steering column apparatus according to the first embodiment only in the configuration of the second energy absorbing member.

That is, the second energy absorbing member includes sliding protrusions 22 protruded from the lower end portion of the moving side column jacket 3 toward the fixed side column jacket 2, and a pair of left and right second energy absorbing plates 32, 32 that are coupled to the vehicle body fixing bracket 12 and the uncoupling bracket 11 and that are plastically deformed while being torn along tearing portions 32a.

Since other configurations are similar to those of the first embodiment, portions with the same configuration are designated with like reference numerals, and explanations thereof will be omitted.

In the fourth embodiment, when the impact energy absorbing structure is set to be the low load setting, impact energy is absorbed by the sliding protrusions 22 and the pair of second energy absorbing plates 32,32, so that small impact energy can be efficiently absorbed, and when the impact energy absorbing structure is set to be the high load setting, impact energy is absorbed by not only the first energy absorbing plate 18 but also the sliding protrusions 22 and the pair of second energy absorbing plates 32, 32, so that large impact energy can be efficiently absorbed. Thus, also in the fourth embodiment, since the small load setting and the large load setting can be selected as the impact energy absorbing structure like the first embodiment, collision energy of the steering column apparatus 1D can be effectively absorbed according to the status of a vehicle collision (the collision velocity, the weight of an occupants), whether the seatbelt was fastened, or the like).

In the fourth embodiment, the second energy absorbing member includes the sliding protrusions 22 provided on the lower end portion of the moving side column jacket 3, and the second energy absorbing bracket 32 that are coupled to the vehicle body fixing bracket 12 and the uncoupling bracket 11 and have the tearing portions 32a. Accordingly, the second energy absorbing member is constituted by two kinds of energy absorbing structures, so that the number of variations of the energy absorbing characteristic increases. Further, even if a failure or the like occurs in one of the two kinds of energy absorbing structures, the minimal impact energy absorbing function can be maintained, thereby improving its reliability.

In the fourth embodiment, the second energy absorbing member includes the second energy absorbing plates 32 and the sliding protrusions 22, it can include only the second energy absorbing plates 32.

In the first to fourth embodiments, the first energy absorbing member is constituted by the first energy absorbing plate 18. However, it can be any member that is coupled to the vehicle body fixing bracket 12 and the uncoupling bracket 11 such that the coupling can be cancelled and can absorb impact energy in a coupled state when the moving side column jacket 3 is moved in a front direction of the vehicle body. While the second energy absorbing member is constituted by the sliding protrusions 22, it can be any member that can absorb impact energy when the moving side column jacket 3 is moved in a front direction of the vehicle body.

In the first to fourth embodiments, the sliding protrusions 22 that are the second energy absorbing member are provided on the moving side column jacket 3. However, they can be provided on the fixed side column jacket 2, or on both the moving side column jacket 3 and the fixed side column jacket 2.

While the actuator is constituted by the pilot actuator 20 in the first to fourth embodiments, it can be any member that can slide the cutter member 13 instantaneously, and it is not limited to the pilot actuator 20.

The entire contents of Japanese Patent Application No. 2006-097736 (filed on March 31, 2006) are incorporated herein by reference.

Although the invention has been described above by reference to certain embodiments of the invention, the invention is not limited to the embodiments described above. Modifications and variations of the embodiments descried above will occur to those skilled in the art, in light of the above teachings. The scope of the invention is defined with reference to the following claims.

## Claims

1. A steering column apparatus for a vehicle, comprising:
a vehicle body fixing bracket fixed to a vehicle body;
an uncoupling bracket fixed to a moving side column jacket;
a coupling member that couples the vehicle body fixing bracket and the uncoupling bracket such that the fixing bracket and the uncoupling bracket can be separated from each other;
a cutter member slidably disposed between the a coupling position and a separating position, the cutter member separating the coupling member when the cutter member is moved from the coupling position to the separating position;
an energy absorbing member that is coupled to the vehicle body fixing bracket and the uncoupling bracket so as to be capable of uncoupling the vehicle body fixing bracket and the uncoupling bracket from each other and so as to absorb impact energy when the moving side column jacket moves in a front direction of the vehicle body in a coupled state; and
an actuator that moves the cutter member held at the coupling position to the separating position, and that cancels coupling relation of the energy absorbing member with at least one of the vehicle body fixing bracket and the uncoupling bracket, wherein
the actuator is actuated when it is determined to be low load setting; and
the actuator is not actuated when it is determined to be high load setting.

2. The steering column apparatus for a vehicle according to claim 1, wherein
the energy absorbing member is an energy absorbing plate that is plastically deformed while being torn along a tearing portion to absorb impact energy by tearing and plastic deformation, when the moving side column jacket moves in the front direction of the vehicle body in the coupled state.

3. The steering column apparatus for a vehicle according to claim 2, wherein
the cutter member has a latch hole and a relief hole communicating therewith;
a latch portion of the energy absorbing member is latched to the latch hole so that the energy absorbing member is coupled to the vehicle body fixing bracket via the cutter member; and
a rod is moved by actuation of the actuator so that the cutter member is moved to the separating position and the latch portion of the energy absorbing member is displaced to a position where the latch portion is inserted into the relief hole according to movement of the cutter member, thereby the coupling relation of the energy absorbing member with the vehicle body fixing bracket is cancelled.

4. The steering column apparatus for a vehicle according to claim 1, wherein
the actuator includes a rod constituted by a large diameter rod portion and a small diameter rod portion;
the large diameter rod portion is latched to a latch hole of the energy absorbing member so that the energy absorbing member is coupled to the vehicle body fixing bracket via the actuator; and
the rod is moved according to actuation of the actuator so that the cutter member is moved to the separating position, then the small diameter rod portion is displaced to a position where the small diameter rod portion is inserted into the latch hole of the energy absorbing member, thereby the coupling relation of the energy absorbing member with the vehicle body fixing bracket is cancelled.

5. The steering column apparatus for a vehicle according to claim 1, wherein
the actuator has a U-shape rod bent in a U shape;
the U-shape rod is latched to a latch hole of the energy absorbing member so that the energy absorbing member is coupled to the vehicle body fixing bracket via the actuator;
the U-shaped rod is moved according to actuation of the actuator so that the cutter member is moved to the separating position and that the U-shaped rod escapes from the latch hole of the energy absorbing member, thereby the coupling relation of the energy absorbing member with the vehicle body fixing bracket is cancelled.

6. The steering column apparatus for a vehicle according to claim 1, wherein
the energy absorbing member comprises:
a first energy absorbing member that is coupled to the vehicle body fixing bracket and the uncoupling bracket to be capable of uncoupling the vehicle body fixing bracket and the uncoupling bracket, and that absorbs impact energy in a coupled state when the moving side column jacket moves in the front direction of the vehicle body; and
a second energy absorbing member that absorbs impact energy when the moving side column jacket moves in the front direction of the vehicle.

7. The steering column apparatus for a vehicle according to claim 6, wherein
the second energy absorbing member is a sliding protrusion that is protruded from at least one of the fixed side column jacket and the moving side column jacket inserted into an upper end portion of the fixed side column jacket and that is protruded toward the other column jacket, and that absorbs impact energy through sliding resistance when the moving side column jacket moves in the front direction of the vehicle body

8. The steering column apparatus for a vehicle according to claim 6, wherein
the second energy absorbing member is a second energy absorbing plate that is coupled to the vehicle body fixing bracket and the uncoupling bracket and that is plastically deformed while being torn along a tearing portion to absorb impact energy by tearing and plastic deformation.

9. The steering column apparatus for a vehicle according to claim 6, wherein
the second energy absorbing member comprises:
a sliding protrusion that is protruded from at least one of the fixed side column jacket and the moving side column jacket inserted into an upper end portion of the fixed side column jacket and that is protruded toward the other column jacket; and
a second energy absorbing plate that is coupled to the vehicle body fixing bracket and the uncoupling bracket and that includes a tearing portion.
